# EUROPEAN PATENT APPLICATION

(11) **EP 4 415 102 A1**
(43) Date of publication of application: **14.08.2024**
(21) Application number: 23215265.2
(22) Date of filing: 08.12.2023
(51) Int. Cl.: H01M 10/0567, H01M 10/0568, H01M 10/0525

(54) **POWER STORAGE DEVICE**

(30) Priority: 09.02.2023 JP 2023018340
(71) Applicant: Prime Planet Energy & Solutions, Inc., Chuo-ku Tokyo 103-0022 (JP)
(72) Inventor: YANO, Yuta, Tokyo, 103-0022 (JP)
(74) Representative: Kuhnen & Wacker Patent- und Rechtsanwaltsbüro PartG mbB

(57) **Abstract**

A power storage device (1) is provided with an electrolytic solution (6) including an electrolyte of a fluorine-containing salt (6S). The electrolytic solution includes at least one kind of a capturing compound (6C), and the capturing compound (6C) includes a heterocyclic ring formed of a plurality of carbon atoms and a plurality of nitrogen atoms, is formed of a cyclic amine compound or a cyclic amide compound in which an imaginary sphere formed by the plurality of nitrogen atoms included in the heterocyclic ring has an imaginary sphere diameter (Dh) of 0.11 to 0.24 nm, and is capable of capturing fluoride ions (F⁻).

## Description

### BACKGROUND

### Technical Field

The present disclosure relates to a power storage device.

### Related Art

Patent Document 1 discloses a lithium-ion secondary battery that includes a nonaqueous electrolytic solution containing a sultone compound A and a boron compound B. In the lithium-ion secondary battery, increase in resistance during storage of the battery can be inhibited by the effect of the sultone compound A. Although the reason is not clear, it is considered that a coating derived from the sultone compound A is formed on a surface of an electrode (negative electrode or positive electrode) while the battery is stored, and degradation of the electrode during the storage is prevented by the effect of the coating formed during storage of the battery, thereby inhibiting increase in resistance.

Furthermore, in the lithium-ion secondary battery, initial resistance (that is, resistance before storage) of the battery can be reduced by the effect of the boron compound B. Although the reason is not clear, it is considered that the boron compound B has higher reduction reactivity than the sultone compound A, and this may be associated with reduction of initial resistance. That is, it is considered that a coating is formed on the surface of the negative electrode by the boron compound B more quickly than the sultone compound A before the battery is stored since the boron compound B has high reduction reactivity. The initial resistance (resistance before storage) of the battery is considered to be reduced by the effect of the coating formed before the battery is stored.

### Related Art Documents

### Patent Documents

Patent Document 1: JP2021-22525A

### SUMMARY

### Technical Problems

To date, in an electrolytic solution that includes a fluorine-containing electrolyte such as LiPF₆, LiPF₆ and a small amount of water mixed in the electrolytic solution have been likely to react to generate HF (hydrogen fluoride). Malfunction such as corrosion of current collecting foil that forms a positive electrode plate or a negative electrode plate, decomposition of a positive active material, and decomposition of a coating of a negative active material have been likely to be caused due to presence of fluoride ions (F⁻) generated by ionization of the HF.

The present disclosure has been made in view of such circumstances, and an object of the present disclosure is to provide a power storage device that can reduce malfunction caused due to presence of fluoride ions (F⁻)

### Means of Solving the Problems

(1) One aspect of the present disclosure to solve the above problem is to provide a power storage device comprising an electrolytic solution including an electrolyte of a fluorine-containing salt, wherein the electrolytic solution includes at least one kind of a capturing compound, and the capturing compound includes a heterocyclic ring formed of a plurality of carbon atoms and a plurality of nitrogen atoms, is formed of any one of a cyclic amine compound and a cyclic amide compound in which an imaginary sphere formed by the plurality of nitrogen atoms included in the heterocyclic ring has an imaginary sphere diameter of 0.11 to 0.24 nm, and is capable of capturing fluoride ions (F⁻).

In the power storage device, since the electrolytic solution includes the above-described capturing compound, fluoride ions (F⁻) derived from an electrolyte of fluorine-containing salt such as LiPF₆ can be captured into the capturing compound, and malfunction caused due to presence of fluoride ions can be inhibited.

Examples of the power storage device include secondary batteries such as a lithium-ion secondary battery and a sodium-ion secondary battery, and capacitors such as a lithium ion capacitor.

As the electrolytic solution, a nonaqueous electrolytic solution obtained by dissolving an electrolyte salt in an organic solvent can be used. Examples of the organic solvent include cyclic carbonate esters such as propylene carbonate and ethylene carbonate, and linear (chain) carbonates such as dimethyl carbonate, diethyl carbonate, and ethyl methyl carbonate.

The electrolyte that forms the electrolytic solution includes a fluorine-containing salt such as a fluorine-containing lithium salt and a fluorine-containing sodium salt. Examples of the fluorine-containing lithium salt include lithium salts forming the electrolyte such as LiBF₄, LiAsF₆, LiPF₆, LiCF₃SO₃, LiN(SO₂CF₃)₂, LiN(SO₂C₂F₅)₂, and LiN(SO₂CF₃)(SO₂C₄F₉), and examples of the fluorine-containing sodium salt include sodium salts forming the electrolyte such as NaPF₆, and Na⁺(CF₃SO₂)₂N⁻(NaTFSI). As the fluorine-containing salt, one of the above-described salts may be used alone or, for example, a mixture of two or more of the above-described salts may be used. However, the fluorine-containing salt is not limited thereto. In an electrolytic solution including an electrolyte of a fluorine-containing salt, fluoride ions (F⁻) derived from the salt may be generated, and the fluoride ions react with water in the power storage device to generate an acidic substance containing fluoride ions, for example, to generate hydrofluoric acid (HF).

The capturing compound is a cyclic amine compound or a cyclic amide compound capable of capturing fluoride ions (F⁻) each having a fluoride ion diameter of 0.119 nm (=1.19 Å). Specifically, the capturing compound includes a heterocyclic ring formed of a plurality of carbon atoms C and a plurality of nitrogen atoms N. In addition, an imaginary sphere diameter Dh of an imaginary sphere formed by the plurality of nitrogen atoms included in the heterocyclic ring is almost equal to a diameter DF of a fluoride ion (F⁻) and not larger than twice the diameter DF, that is, the capturing compound has such a size that the imaginary sphere diameter Dh is in the above-described range, namely, 90% to 200% of the diameter DF. In such a capturing compound (cyclic amine compound or cyclic amide compound), it is considered that the potential of the plurality of nitrogen atoms forming the heterocyclic ring deviates to the positive potential side, and fluoride ions charged with negative potential are thus attracted to the nitrogen side and captured by the heterocyclic ring.

As the "imaginary sphere" formed by the plurality of nitrogen atoms included in the heterocyclic ring, an imaginary sphere obtained by bringing the plurality of nitrogen atoms included in the heterocyclic ring into contact with the spherical surface, and including no other elements thereinside, is assumed. The "imaginary sphere diameter" refers to a diameter of the imaginary sphere. Specifically, the software WebMo available from a site of WebMO.net (https://www.webmo.net/) over the Internet is activated, and a molecular structure of a capturing compound for which an imaginary sphere diameter is to be obtained is rendered. Subsequently, a structural optimization calculation (geometry optimization) is performed such that the molecular structure of the rendered capturing compound becomes the most stable conformation (global minimum), specifically, "optimization" button is pressed (clicked), structural optimization of the molecular structure of the capturing compound is performed, and a 3D (three-dimensional) structure of the molecule of the capturing compound after the structural optimization is specified. Subsequently, an imaginary sphere diameter is obtained based on the specified structure. Specifically, in a case where the number of a plurality of nitrogen atoms N included in a molecular heterocyclic ring of the obtained capturing compound is two, an N-N space distance that is a space between the two nitrogen atoms N is obtained, and a sphere in which the space between the two nitrogen atoms is a diameter, is assumed. This sphere is defined as an imaginary sphere, and the diameter of the assumed sphere is defined as the imaginary sphere diameter. In a case where the number of a plurality of nitrogen atoms N included in the molecular heterocyclic ring of the capturing compound is three or more, a sphere in which each of the nitrogen atoms N included in the molecular heterocyclic ring touches an outside of a spherical surface is assumed, this sphere is defined as an imaginary sphere, and the diameter of the assumed sphere is defined as the imaginary sphere diameter.

(2) In the power storage device in the above (1), preferably, in at least one kind of the capturing compound, the imaginary sphere diameter is 0.11 to 0.20 nm.

In the power storage device, the electrolytic solution includes a capturing compound having the above-described imaginary sphere diameter Dh. As described above, the diameter DF of a fluoride ion (F⁻) is 0.119 nm (=1.19 Å). In the power storage device that uses a capturing compound having the imaginary sphere diameter Dh almost equal to the diameter DF of a fluoride ion (F⁻) and/or slightly larger than the diameter DF of a fluoride ion (F⁻), specifically, 90% to 170% of the diameter DF, fluoride ions can be more appropriately captured. Fluoride ions (F⁻) derived from a fluorine-containing electrolyte such as LiPF₆ can be thus captured, and malfunction caused due to presence of fluoride ions can be further inhibited.

(3) In the power storage device in the above (1), preferably, in at least one kind of the capturing compound, the imaginary sphere diameter is 0.18 to 0.24 nm, and chloride ions (Cl⁻) can also be captured.

In addition to fluoride ions (F⁻) included in the electrolytic solution, chloride ions (Cl⁻) may also be included. This is because, for example, a binder (for example, PVDF or CMC) or a conductive material used for a positive active material layer or a negative active material layer may contain chloride ions (Cl⁻) as impurities. In such a case, an acidic substance such as HCl is generated by the chloride ions, and the chloride ions as well as fluoride ions (F⁻) may cause malfunction such as corrosion of current collecting foil that forms a positive electrode plate or a negative electrode plate, decomposition of a positive active material, and decomposition of a coating of a negative active material.

In the power storage device, the electrolytic solution includes a capturing compound which has the imaginary sphere diameter Dh in the above-described range, and is also capable of capturing chloride ions (Cl⁻). As described above, the diameter DF of a fluoride ion (F⁻) is 0.119 nm (=1.19 Å). The diameter DCL of a chloride ion (Cl⁻) is 0.181 nm (=1.81 Å).

Therefore, in the capturing compound having the imaginary sphere diameter Dh in the above-described range, the imaginary sphere diameter Dh is slightly larger than the diameter DF of a fluoride ion and not larger than twice the diameter DF of a fluoride ion, that is, 150% to 200% of the diameter DF of a fluoride ion (F⁻). In addition, the imaginary sphere diameter Dh in the capturing compound is almost equal to the diameter DCL of a chloride ion and/or slightly larger than the diameter DCL of a chloride ion, that is, 100% to 130% of the diameter DCL. Therefore, in the power storage device in which the capturing compound is used, fluoride ions can be captured and malfunction caused due to presence of fluoride ions can be inhibited, and furthermore, chloride ions can also be suitably captured, and malfunction caused due to presence of chloride ions can be inhibited.

(4) In the power storage device in the above (3), preferably, in at least one kind of the capturing compound, the imaginary sphere diameter is 0.18 to 0.20 nm.

In the power storage device, the electrolytic solution includes the capturing compound having the imaginary sphere diameter Dh in the above-described range. The capturing compound can suitably capture fluoride ions, and, in addition thereto, can particularly suitably capture chloride ions.

That is, in the capturing compound having the imaginary sphere diameter Dh in the above-described range, the imaginary sphere diameter Dh is slightly larger than the diameter DF of a fluoride ion, that is, 150% to 170% of the diameter DF of a fluoride ion (F⁻). In addition, the imaginary sphere diameter Dh in the capturing compound is almost equal to the diameter DCL of a chloride ion and/or slightly larger than the diameter DCL of a chloride ion, that is, 100% to 110% of the diameter DCL. Therefore, in the power storage device in which the above-described capturing compound is used, fluoride ions can be more appropriately captured, and malfunction caused due to presence of fluoride ions can be inhibited. In addition thereto, chloride ions can also be particularly suitably captured, and malfunction caused due to presence of chloride ions can be inhibited.

(5) In the power storage device in any one of the above (1) to (4), preferably, one kind of the capturing compound is 1,5,9-triazacyclododecane.

In the power storage device, as one kind of the capturing compound included in the electrolytic solution, 1,5,9-triazacyclododecane having an imaginary sphere diameter of 0.19 nm is used. Therefore, in the power storage device, fluoride ions can be suitably captured, and in addition thereto, chloride ions can also be particularly suitably captured by the above-described capturing compound. Malfunction caused due to presence of fluoride ions can be inhibited, and in addition thereto, malfunction caused due to presence of chloride ions can also be particularly suitably inhibited.

(6) In the power storage device in the above (5), preferably, the electrolytic solution contains 1,5,9-triazacyclododecane at a compound concentration ranging from 0.8 to 2.5 mol/L.

In the power storage device, a compound concentration CN of 1,5,9-triazacyclododecane as the capturing compound in the electrolytic solution is in the above-described range. Therefore, in the power storage device, in the electrolytic solution that includes the capturing compound having the above-described compound concentration CN, fluoride ions can be more suitably captured, and in addition thereto, chloride ions can also be particularly suitably captured, and malfunction caused due to presence of fluoride ions and chloride ions can be inhibited.

(7) In the power storage device in the above (2), preferably, one kind of the capturing compound is 2,2',2"-(1,4,7-triazonane-1,4,7-triyl)triacetic acid.

In the power storage device, as one kind of the capturing compound included in the electrolytic solution, 2,2',2"-(1,4,7-triazonane-1,4,7-triyl)triacetic acid having an imaginary sphere diameter of 0.12 nm is used. Therefore, in the power storage device, fluoride ions can be particularly suitably captured by the above-described capturing compound, and malfunction caused due to presence of fluoride ions can be inhibited.

### BRIEF DESCRIPTION OF THE DRAWINGS

FIG. 1 is a partial cutaway perspective view of a battery in an embodiment; and
FIG. 2 illustrates a positive electrode plate, a negative electrode plate, and separators that form an electrode body in the embodiment.

### DETAILED DESCRIPTION OF THE EXEMPLARY EMBODIMENTS

### Embodiment

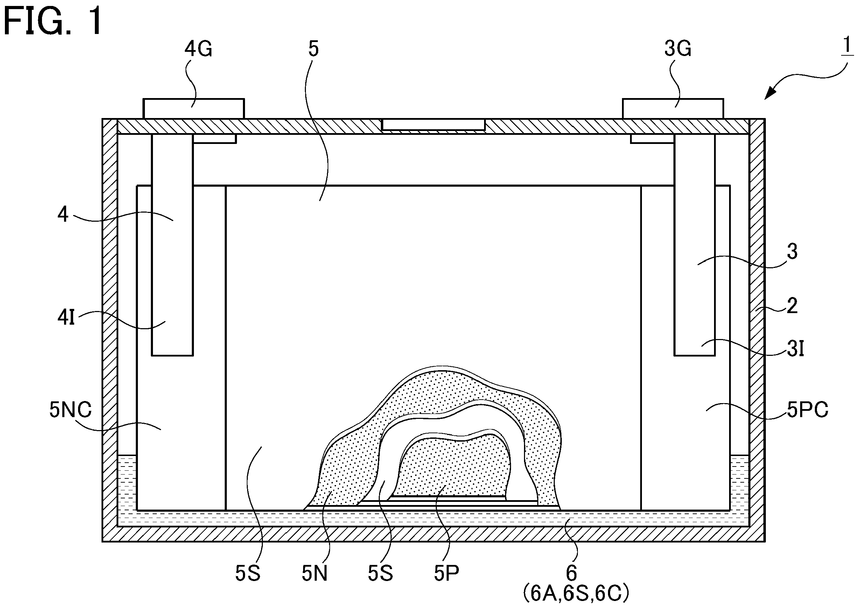

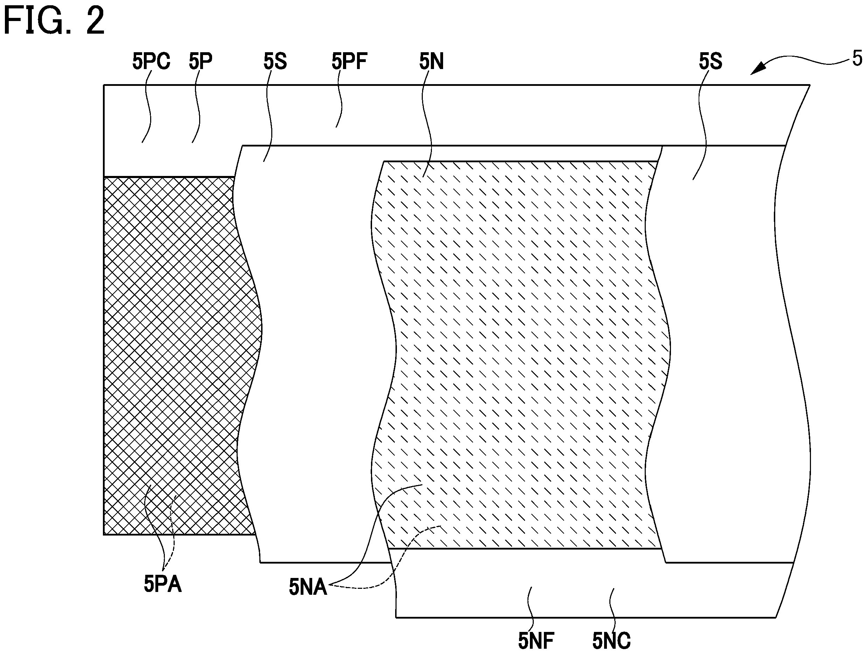

A battery 1 as one example of a power storage device that is a lithium-ion secondary battery according to an embodiment of the present disclosure will be described below with reference to FIGs. 1 and 2. The battery 1 is a rectangular sealed lithium-ion secondary battery and is mounted to vehicles such as a hybrid vehicle, a plug-in hybrid vehicle, and an electric vehicle, and various devices.

The battery 1 of the present embodiment includes a battery case 2, an electrode body 5 stored inside the battery case 2, a positive terminal 3 and a negative terminal 4 fixed to the battery case 2, and an insulating member (not shown) for insulating the battery case 2 from the electrode body 5 and the terminals 3 and 4. Among them, the battery case 2 is made of metal (aluminum in the present embodiment) and has a rectangular parallelepiped box-like shape. The electrode body 5 is covered with a not-illustrated bag-shaped insulating film in the battery case 2. An electrolytic solution 6 is stored in the battery case 2, and a part of the electrolytic solution 6 is impregnated into the electrode body 5 and another part thereof is accumulated at the bottom portion of the battery case 2.

The electrode body 5 stored inside the battery case 2 is a so-called flat wound electrode body. A strip-shaped positive electrode plate 5P and a strip-shaped negative electrode plate 5N are wound via a pair of strip-shaped separators 5S. The thus wound electrode body is pressed in a direction orthogonal to the surface of the drawing sheet in FIG. 1 and thus flattened. The electrode body 5 is stored sideways in the battery case 2.

In the electrode body 5, the strip-shaped positive electrode plate 5P includes positive current collecting foil 5PF formed of aluminum foil, and positive active material layers 5PA laminated on both surfaces of the positive current collecting foil 5PF (see FIG. 2). The positive active material layer 5PA includes not-illustrated positive active material particles, electrically conductive particles, and a binding agent. In the present embodiment, lithium transition metal composite oxide particles are used as the positive active material particles. Specifically, for example, lithium nickel cobalt manganese composite oxide particles are used. As the electrically conductive particles, for example, acetylene black (AB) is used. As the binding agent, for example, polyvinylidene fluoride (PVDF) is used. In the strip-shaped positive electrode plate 5P, at the end portion on one side (i.e., an upper side in FIG. 2) in the width direction, the positive active material layer 5PA is not disposed on the positive current collecting foil 5PF, and a positive current collecting portion 5PC in which the positive current collecting foil 5PF is exposed is formed.

Meanwhile, the strip-shaped negative electrode plate 5N includes negative current collecting foil 5NF formed of copper foil, and negative active material layers 5NA laminated on both surfaces of the negative current collecting foil 5NF (see FIG. 2). The negative active material layer 5NA includes not-illustrated negative active material particles and a binding agent. In the present embodiment, graphite particles are used as the negative active material particles. In the strip-shaped negative electrode plate 5N at the end portion on the other side (i.e., a lower side in FIG. 2) in the width direction, the negative active material layer 5NA is not disposed on the negative current collecting foil 5NF, and a negative current collecting portion 5NC, in which the negative current collecting foil 5NF is exposed, is formed.

The positive terminal 3 is formed of an aluminum plate and is elongated. An inner connecting portion 3I formed at one end portion of the positive terminal 3 is connected to the positive current collecting portion 5PC of the positive electrode plate 5P forming the electrode body 5. Meanwhile, the other end portion of the positive terminal 3 is extended externally from the battery case 2 and forms an external positive terminal portion 3G.

The negative terminal 4 is formed of a copper plate and is elongated. An inner connecting portion 4I formed at one end portion of the negative terminal 4 is connected to the negative current collecting portion 5NC of the negative electrode plate 5N forming the electrode body 5. Meanwhile, the other end portion of the negative terminal 4 is extended externally from the battery case 2 and forms an external negative terminal portion 4G.

The electrolytic solution 6 is a nonaqueous electrolytic solution that includes an organic solvent 6A and a lithium salt 6S containing fluorine. In the present embodiment, an organic solvent obtained by mixing ethylene carbonate, ethyl methyl carbonate, and dimethyl carbonate at a weight ratio of 3:3:4 is used as the organic solvent 6A. LiPF₆ is used as the lithium salt 6S containing fluorine. A concentration of LiPF₆ in the electrolytic solution 6 is 1.16 mol/L.

To date, in an electrolytic solution that contains fluorine-containing lithium salt such as LiPF₆, a small amount of water contained in the electrolytic solution and LiPF₆ or the like have been likely to react to generate HF (hydrogen fluoride). In this case, corrosion of current collecting foil that forms a positive electrode plate or a negative electrode plate, decomposition of a positive active material, and decomposition of a coating of a negative active material may be caused due to the action of fluoride ions (F⁻) generated by ionization of the generated HF.

For addressing this, in the present embodiment, a capturing compound 6C capable of capturing fluoride ions (F⁻) is further added to the above-described electrolytic solution 6. Specifically, the capturing compound 6C including a heterocyclic ring formed of a plurality of carbon atoms and a plurality of nitrogen atoms is formed of a cyclic amine compound or a cyclic amide compound, in which an imaginary sphere diameter Dh of an imaginary sphere formed by the plurality of nitrogen atoms in the heterocyclic ring is 0.11 to 0.24 nm (=1.1 to 2.4 Å) and is capable of capturing fluoride ions (F⁻). The above-mentioned capturing compound 6C is added to the electrolytic solution 6. Thus, in a case where the electrolytic solution 6 to which the capturing compound 6C is added is used for the battery 1, fluoride ions (F⁻) generated in the electrolytic solution 6 are captured by the capturing compound 6C, and a concentration of fluoride ions (F⁻) in the electrolytic solution 6 can be reduced. Thus, malfunction such as corrosion of the current collecting foil, decomposition of the positive active material, and decomposition of the coating of the negative active material due to presence of fluoride ions (F⁻) can be inhibited. The fluoride ions (F⁻) are captured through coordinate bond to a plurality of nitrogen atoms included in the heterocyclic ring moiety of the capturing compound 6C.

More specifically, in the present embodiment, a cyclic amine compound (hereinafter, referred to as "cyclic amine 1") represented by the following chemical formula 1, specifically, 1,5,9-triazacyclododecane (CAS: 294-80-4) is added as the capturing compound 6C to the electrolytic solution 6 such that the compound concentration CN is 2.0 mol/L (=2.0 M). The imaginary sphere diameter Dh of the cyclic amine 1 is 0.19 nm. The diameter (ion diameter) DF of a fluoride ion (F⁻) is 0.119 nm. Therefore, the imaginary sphere diameter Dh (=0.19 nm) of the cyclic amine 1 is slightly larger than the diameter DF (=0.119 nm) of a fluoride ion, and a fluoride ion is considered to be suitably captured into the imaginary sphere formed by the plurality of nitrogen atoms in the heterocyclic ring.

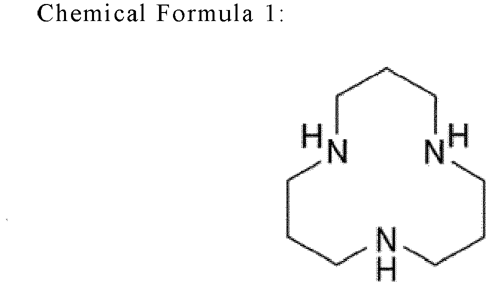

To date, chloride ions (Cl⁻) have been contained in the electrolytic solution in some cases. This is because chloride ions (Cl⁻) may be contained as impurities in a binder (for example, PVDF, CMC, or the like) used for the positive active material layer 5PA of the positive electrode plate 5P and the negative active material layer 5NA of the negative electrode plate 5N. Also in this case, as in a case where fluoride ions (F⁻) are contained, corrosion of the current collecting foil that forms the positive electrode plate or the negative electrode plate, decomposition of the positive active material, and decomposition of the coating of the negative active material may be caused due to the action of the chloride ions (Cl⁻).

For addressing this, in the present embodiment, not only fluoride ions (F⁻) but also chloride ions (Cl⁻) can be captured by the capturing compound 6C (cyclic amine 1) added to the above-described electrolytic solution 6. Specifically, the capturing compound 6C including a heterocyclic ring formed of a plurality of carbon atoms and a plurality of nitrogen atoms is formed of a cyclic amine compound or a cyclic amide compound in which the imaginary sphere diameter Dh of an imaginary sphere formed by the plurality of nitrogen atoms in the heterocyclic ring is 0.18 to 0.24 nm (=1.8 to 2.4 Å), and is capable of capturing fluoride ions (F⁻) and chloride ions (Cl⁻). The thus formed capturing compound 6C is added to the electrolytic solution 6. Thus, in a case where the electrolytic solution 6 to which the capturing compound 6C is added is used for the battery 1, chloride ions (Cl⁻) generated in the electrolytic solution 6 are also captured by the capturing compound 6C, and a concentration of chloride ions (Cl⁻) in the electrolytic solution 6 can be reduced. Thus, malfunction such as corrosion of the current collecting foil, decomposition of the positive active material, and decomposition of the coating of the negative active material due to presence of fluoride ions (F⁻) or chloride ions (Cl⁻) can be inhibited. The chloride ions (Cl⁻) are also captured through coordinate bond to the plurality of nitrogen atoms included in the heterocyclic ring moiety of the capturing compound 6C.

In the present embodiment, as described above, the cyclic amine 1, that is, 1,5,9-triazacyclododecane is added as the capturing compound 6C to the electrolytic solution 6 such that the compound concentration CN is 2.0 mol/L (=2.0 M), which correspondes to Example 4 described below. The imaginary sphere diameter Dh in the capturing compound 6C is 0.19 nm. Meanwhile, the diameter (ion diameter) DCL of a chloride ion (Cl⁻) is 0.181 nm. Therefore, the imaginary sphere diameter Dh (=0.19 nm) in the capturing compound 6C is almost equal to the diameter DCL (=0.181 nm) of a chloride ion, and a chloride ion is considered to be able to be particularly suitably captured into the imaginary sphere formed by the plurality of nitrogen atoms in the heterocyclic ring.

Thus, in a case where the electrolytic solution 6 to which the capturing compound 6C is added is used for the battery 1, fluoride ions (F⁻) generated by ionization of HF in the electrolytic solution 6 are captured by the capturing compound 6C, and a concentration of fluoride ions (F⁻) in the electrolytic solution 6 can be reduced. Thus, malfunction such as corrosion of the current collecting foil, decomposition of the positive active material, and decomposition of the coating of the negative active material due to presence of fluoride ions (F⁻) can be inhibited.

In the present embodiment, although the cyclic amine 1, that is, 1,5,9-triazacyclododecane is used as the capturing compound 6C to be added to the electrolytic solution 6, another cyclic amine compound or a cyclic amide compound may also be used. A battery for examination is produced by using several kinds of cyclic amine compounds or cyclic amide compounds, and experiments are performed to evaluate the ability of capturing fluoride ions (F⁻) and chloride ions (Cl⁻).

The battery for examination is produced as follows. Firstly, a positive electrode plate, in which a 47 mm×45 mm positive active material layer is formed on one surface of 57 mm×45 mm rectangular aluminum foil with a 10 mm×45 mm exposed portion being left along one side, is formed. A positive electrode lead plate is extended from the exposed portion of the positive electrode plate. A negative electrode plate, in which a 49 mm×47 mm negative active material layer is formed on one surface of 59 mm×47 mm rectangular copper foil with a 10 mm×47 mm exposed portion being left along one side, is formed. A negative electrode lead plate is also extended from the exposed portion of the negative electrode plate. Thereafter, the negative electrode plate is covered with a rectangular-bag-shaped separator made of porous polypropylene which is opened at one side. The positive electrode plate and the negative electrode plate are overlapped so as to overlap each other such that the whole positive active material layer opposes the negative active material layer via the separator and the positive electrode lead plate and the negative electrode lead plate are extended in the opposite directions. Then, the positive electrode plate, the negative electrode plate, and the separator are stored in a casing formed of a laminate film, and a peripheral edge portion of the casing is heat-sealed except for a liquid inlet. After the electrolytic solution is injected into the casing, the liquid inlet of the casing is thermally bonded to produce a battery for examination. In the injected electrolytic solution, as in the electrolytic solution 6 of the embodiment, LiPF₆ is contained at a concentration of 1.16 mol/L in an organic solvent obtained by mixing ethylene carbonate, ethyl methyl carbonate, and dimethyl carbonate at a weight ratio of 3:3:4. In addition, to the electrolytic solution, the cyclic amine compound or cyclic amide compound described below is added at a predetermined compound concentration CN.

The above-described battery for examination is subjected to five cycles of constant current charging from 3.0 V to 4.3 V at a rate of 1 C, and constant current discharging from 4.3 V to 3.0 V at a rate of 0.5 C. Thereafter, the battery for examination is disassembled, and the concentrations of fluoride ions (F⁻) and chloride ions (Cl⁻) in the electrolytic solution are measured by ion chromatography analysis.

### Example 1

In the battery for examination in Example 1, as the capturing compound 6C to be added to the electrolytic solution, a cyclic amine compound (hereinafter, referred to as "cyclic amine 2") represented by the following chemical formula 2, specifically, tetraethyl 1,4,8,11-tetraazacyclotetradecane-1,4,8,11-tetraacetate (CAS:126320-57-8) is used. In Example 1, the compound concentration CN of the cyclic amine 2 in the electrolytic solution is 1.0 mol/L.

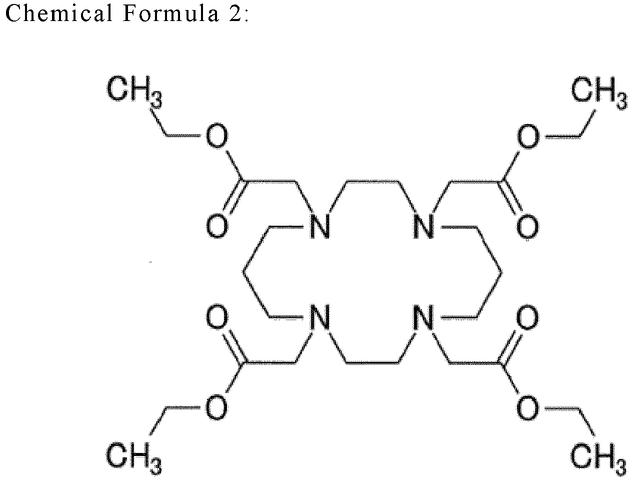

### Example 2

In the battery for examination in Example 2, as the capturing compound 6C to be added to the electrolytic solution, the cyclic amine 1, represented by the above-described chemical formula 1, which is the same as in the embodiment, specifically, 1,5,9-triazacyclododecane is used. In Example 2, the compound concentration CN of the cyclic amine 1 in the electrolytic solution is also 1.0 mol/L.

### Examples 3 to 5

In the battery for examination in each of Examples 3 to 5, as the capturing compound 6C to be added to the electrolytic solution, the cyclic amine 1 that is the same as in Example 2 described above, that is, 1,5,9-triazacyclododecane is used. However, the compound concentrations CN of the cyclic amine 1 in the electrolytic solution in Examples 3 to 5 are as follows. The compound concentration CN in each of Examples 3 to 5 is 0.1 mol/L in Example 3, 2.0 mol/L in Example 4, and 5.0 mol/L in Example 5. The electrolytic solution 6 of the battery 1 of the above-described embodiment corresponds to the electrolytic solution of the battery for examination in Example 4.

### Example 6

In the battery for examination in Example 6, as the capturing compound 6C to be added to the electrolytic solution, a cyclic amine compound (hereinafter, referred to as "cyclic amine 3") represented by the following chemical formula 3, specifically, 2,2',2"-(1,4,7-triazonane-1,4,7-triyl)triacetic acid (CAS: 56491-86-2) is used. In Example 6, the compound concentration CN of the cyclic amine 3 in the electrolytic solution is 1.0 mol/L.

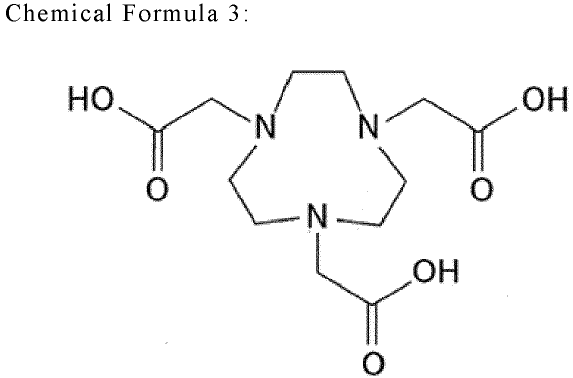

### Comparative Example 1

In the battery for examination in Comparative example 1, no compound is added to the electrolytic solution.

### Comparative Example 2

In the battery for examination in Comparative example 2, as a compound to be added to the electrolytic solution, a linear amine compound (hereinafter, referred to as "linear amine 1") represented by the following chemical formula 4, specifically, N,N,N',N'-tetramethylethylenediamine (CAS: 110-18-9) is used. In Comparative example 2, the compound concentration CN of the linear amine 1 in the electrolytic solution is also 1.0 mol/L.

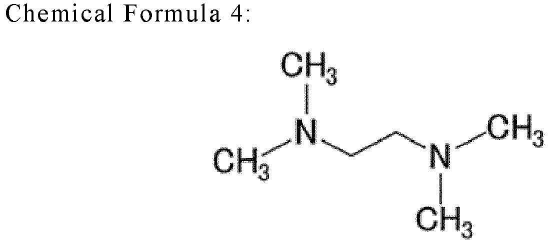

### Comparative Example 3

In the battery for examination in Comparative example 3, as a compound to be added to the electrolytic solution, a cyclic amine compound (hereinafter, referred to as "cyclic amine 4") represented by the following chemical formula 5, specifically, 4,7,13,16,21,24-hexaoxa-1,10-diazobicyclo[8,8,8]hexacosane (CAS: 23978-09-8) is used. In Comparative example 3, the compound concentration CN of the cyclic amine 4 in the electrolytic solution is also 1.0 mol/L.

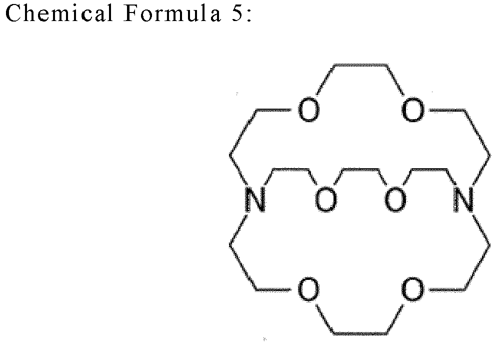

**Table 1**

| No. | Compound | Imaginary Sphere Diameter Dh (nm) | Compound Concentration CN (mol/L) | Fluoride Ion Concentration CF (mass%) | Chloride Ion Concentration CCL (mass%) | F Ion Capturing Evaluation | Chloride Ion Capturing Evaluation |
|---|---|---|---|---|---|---|---|
| COMP. EXAMPLE 1 | N/A | - | - | 0.42 | 0.53 | - | - |
| COMP. EXAMPLE 2 | Linear Amine 1 (Formula 4) | - | 1.0 | 0.43 | 0.52 | D | D |
| COMP. EXAMPLE 3 | Cyclic Amine 4 (Formula 5) | 0.28 | 1.0 | 0.45 | 0.51 | D | D |
| EXAMPLE 1 | Cyclic Amine 2 (Formula 2) | 0.21 | 1.0 | 0.35 | 0.40 | C | C |
| EXAMPLE 2 | Cyclic Amine 1 (Formula 1) | 0.19 | 1.0 | 0.30 | 0.25 | B | A |
| EXAMPLE 3 | Cyclic Amine 1 (Formula 1) | 0.19 | 0.1 | 0.39 | 0.44 | C | C |
| EXAMPLE 4 | Cyclic Amine 1 (Formula 1) | 0.19 | 2.0 | 0.25 | 0.19 | B | A |
| EXAMPLE 5 | Cyclic Amine 1 (Formula 1) | 0.19 | 5.0 | 0.23 | 0.18 | B | A |
| EXAMPLE 6 | Cyclic Amine 3 (Formula 3) | 0.12 | 1.0 | 0.21 | 0.54 | A | D |

| | | | | | | | |
|---|---|---|---|---|---|---|---|
| Fluoride Ion Diameter(nm): 0.119 Chloride Ion Diameter(nm): 0.181 Fluoride Ion Capturing Evaluation D: 0.40 or more C: 0.31 to 0.39 B: 0.22 to 0.30 A: 0.21 or less Chloride Ion Capturing Evaluation D: 0.50 or more C: 0.39 to 0.49 B: 0.28 to 0.38 A: 0.27 or less | | | | | | | |

The relantionship among the compound added to the electrolytie solution of the battery for examination in each of Examples 1 to 6 and Comparative Examples 1 to 3 and the compound concentration CN thereof, the fluoride ion concentration CF and the chloride ion concentration CCL in each electrolytic solution, and the evaluation result of the fluoride ion capturing ability and the evaluation result of the chloride ion capturing ability based on the compound and the compound concentration CN will be described with reference to Table 1 indicated above.

Firstly, Comparative example 1 will be examined. In the battery for examination in Comparative example 1 in which no compound is added to the electrolytic solution, the fluoride ion concentration CF in the electrolytic solution is 0.42 mass%, and the chloride ion concentration CCL therein is 0.53 mass%. These values are used as references for determining whether the values in each example are good or bad.

The evaluation results (indicated as "F ion capturing evaluation" in Table 1) of the fluoride ion capturing ability in Table 1 are as follows. When the fluoride ion concentration CF is not less than 0.40, the capturing ability is evaluated as being absent or low (D as poor). When the fluoride ion concentration CF is 0.31 to 0.39, the capturing ability is evaluated as being present (C as fair). When the fluoride ion concentration CF is 0.22 to 0.30, the capturing ability is evaluated as being good (B as good). When the fluoride ion concentration CF is not larger than 0.21, the capturing ability is evaluated as being particularly good (A as excellent). The evaluation results (indicated as "Cl ion capturing evaluation" in Table 1) of the chloride ion capturing ability are as follows. When the chloride ion concentration CCL is not less than 0.50, the capturing ability is evaluated as being absent or low (D as poor). When the chloride ion concentration CCL is 0.39 to 0.49, the capturing ability is evaluated as being present (C as fair). When the chloride ion concentration CCL is 0.28 to 0.38, the capturing ability is evaluated as being good (B as good). When the chloride ion concentration CCL is not larger than 0.27, the capturing ability is evaluated as being particularly good (A as excellent).

Next, Comparative example 2 will be examined. In Comparative example 2, the fluoride ion concentration CF and the chloride ion concentration CCL indicated almost the same values as the values of Comparative example 1 which are used as the references. Therefore, the F ion capturing evaluation and the Cl ion capturing evaluation are each D as poor. In Comparative example 2, the linear amine 1 (see chemical formula 4) which is an amine compound but does not include a heterocyclic ring formed of a plurality of carbon atoms and a plurality of nitrogen atoms, is used as the compound to be added to the electrolytic solution. The results of Comparative example 2 indicate that the linear amine 1 is not able to capture fluoride ions and chloride ions in the electrolytic solution.

Also in Comparative example 3, the fluoride ion concentration CF and the chloride ion concentration CCL in the electrolytic solution indicated almost the same values as the values of Comparative example 1 which are used as the references. Therefore, the F ion capturing evaluation and the Cl ion capturing evaluation are each D as poor. In Comparative example 3, the cyclic amine 4 (see chemical formula 5) which includs a heterocyclic ring formed of a plurality of carbon atoms and a plurality of nitrogen atoms but has the relatively great imaginary sphere diameter Dh of 0.28 nm, is used as the compound to be added. The results of Comparative example 3 indicate that fluoride ions and chloride ions in the electrolytic solution are not able to be appropriately captured by the cyclic amine 4. This may be because the imaginary sphere diameter Dh (0.28 nm) of the cyclic amine 4 (see chemical formula 5) is excessively larger than each of the diameter DF (0.119 nm) of a fluoride ion and the diameter DCL (0.181 nm) of a chloride ion (Dh=DF+0.161 nm, Dh=DCL+0.099 nm).

Meanwhile, in Example 1, the fluoride ion concentration CF and the chloride ion concentration CCL indicates significantly lower values than the values of Comparative example 1 which are used as references. Therefore, the F ion capturing evaluation and the Cl ion capturing evaluation are each C as fair. In Example 1, the cyclic amine 2 (see chemical formula 2) including a heterocyclic ring formed of a plurality of carbon atoms and a plurality of nitrogen atoms and having the imaginary sphere diameter Dh of 0.21 nm is used as the compound to be added. It is considered that the imaginary sphere diameter Dh (0.21 nm) of the cyclic amine 2 is slightly larger than each of the diameter DF (0.119 nm) of a fluoride ion and the diameter DCL (0.181 nm) of a chloride ion (Dh=DF+0.091 nm, Dh=DCL+0.029 nm), and fluoride ions and chloride ions are able to be each captured by four nitrogen atoms that are included in the heterocyclic ring of the cyclic amine 2 and that forms the imaginary sphere.

In Example 2, the fluoride ion concentration CF and the chloride ion concentration CCL indicate significantly lower values than the values of Comparative example 1 which are used as the references. Particularly, the chloride ion concentration is substantially reduced. Therefore, the F ion capturing evaluation is B as good, and the Cl ion capturing evaluation is A as excellent. In Example 2, the cyclic amine 1 (see chemical formula 1) including a heterocyclic ring formed of a plurality of carbon atoms and a plurality of nitrogen atoms and having the imaginary sphere diameter Dh of 0.19 nm is used as the capturing compound to be added. The imaginary sphere diameter Dh (0.19 nm) of the cyclic amine 1 is slightly larger than the diameter DF (0.119 nm) of a fluoride ion (Dh=DF+0.071 nm), and almost equal to the diameter DCL (0.181 nm) of a chloride ion (Dh=DCL+0.009 nm). Therefore, it is considered that fluoride ions are each captured and chloride ions are each particularly suitably captured by three nitrogen atoms that are included in the heterocyclic ring of the cyclic amine 1 and that forms the imaginary sphere.

Next, Examples 3 to 5 will be examined. In Examples 3 to 5, the cyclic amine 1 (see chemical formula 1) that is the same as in Example 2 is used. However, the compound concentrations CN in the electrolytic solution are different. Specifically, in Example 2, the compound concentration CN of the cyclic amine 1 is 1.0 mol/L whereas the compound concentration CN in Example 3 is low as 0.1 mol/L that is 1/10 of that of Example 2. In Example 4, the compound concentration CN is 2.0 mol/L that is high as twice the compound concentration CN of Example 2. Furthermore, in Example 5, the compound concentration CN is 5.0 mol/L that is high as five times the compound concentration CN of Example 2.

Firstly, Example 3 will be examined. Even in Example 3 in which the compound concentration CN of the cyclic amine 1 is low, the fluoride ion concentration CF and the chloride ion concentration CCL in the electrolytic solution indicate significantly lower values than the values of Comparative example 1 which are used as the references. Therefore, although the compound concentration CN is low, the F ion capturing evaluation and the Cl ion capturing evaluation are each C as fair. This indicates that the cyclic amine 1 functions as the capturing compound 6C capable of capturing fluoride ions and chloride ions although the concentration is low.

Meanwhile, in Example 4 in which the compound concentration CN of the cyclic amine 1 is twice the compound concentration CN of Example 2, the fluoride ion concentration CF and the chloride ion concentration CCL are better than those of Example 2. Therefore, the F ion capturing evaluation is B as good, and the Cl ion capturing evaluation is A as excellent.

Furthermore, in Example 5 in which the compound concentration CN of the cyclic amine 1 is five times the compound concentration CN of Example 2 and 2.5 times the compound concentration CN of Example 4, the fluoride ion concentration CF and the chloride ion concentration CCL are better than those of Examples 2 and 4. Therefore, the F ion capturing evaluation is B as good, and the Cl ion capturing evaluation is A as excellent. However, according to comparison between Example 4 and Example 5, although the compound concentration CN of Example 5 is enhanced so as to be 2.5 times the compound concentration CN of Example 4, a degree of reduction of the fluoride ion concentration CF and the chloride ion concentration CCL in Example 5 is small as compared with that in Example 4. According thereto, it is assumed that, even if the compound concentration CN of the cyclic amine 1 in the electrolytic solution is higher than this, contribution to reduction of the fluoride ion concentration CF and the chloride ion concentration CCL is little.

Therefore, in consideration of both the compound concentration CN (used amount) of the cyclic amine 1 and an effect of reducing the fluoride ion concentration CF and the chloride ion concentration CCL, it is considered that the compound concentration CN as used in Examples 2 and 4, that is, the compound concentration CN ranging from 0.8 to 2.5 mol/L, is good in general.

Next, Example 6 will be examined. In Example 6, the fluoride ion concentration CF indicates a substantially lower value than the value of Comparative example 1 which is used as the reference. Meanwhile, the chloride ion concentration CCL indicates almost the same value as the value of Comparative example 1 used as the reference. Therefore, the F ion capturing evaluation is A as excellent while the Cl ion capturing evaluation is D as poor. In Example 6, the cyclic amine 3 (see chemical formula 3) including a heterocyclic ring formed of a plurality of carbon atoms and a plurality of nitrogen atoms and having the imaginary sphere diameter Dh of 0.12 nm is used as the capturing compound 6C to be added. It is considered that fluoride ions are each particularly suitably captured by three nitrogen atoms that are included in the heterocyclic ring of the cyclic amine 3 and that form the imaginary sphere since the imaginary sphere diameter Dh (0.12 nm) of the cyclic amine 3 is almost equal to the diameter DF (0.119 nm) of the fluoride ion (Dh=DF+0.001 nm). Meanwhile, it is considered that each of chloride ions is not able to be appropriately captured by three nitrogen atoms that are included in the heterocyclic ring of the cyclic amine 3 and that form the imaginary sphere since the imaginary sphere diameter Dh is excessively less than the diameter DCL (0.181 nm) of a chloride ion (Dh=DCL-0.061 nm). That is, it is found that the cyclic amine 3 is able to selectively capture only fluoride ions among fluoride ions and chloride ions in the electrolytic solution.

According to the results of Comparative examples 1 to 3 and Examples 1 to 6, the relationship between the imaginary sphere diameter Dh of the capturing compound 6C and reduction (capturing of fluoride ions) of the fluoride ion concentration CF in the electrolytic solution is examined. In the battery 1 including the electrolytic solution 6 in which the cyclic amine compound such as the cyclic amines 1 to 3 (see chemical formulas 1 to 3) of Examples 1 to 6 having the imaginary sphere diameter Dh of 0.11 to 0.24 nm (=1.1 to 2.4 Å, 90% to 200% of the diameter DF of a fluoride ion) is used as the capturing compound 6C, fluoride ions (F⁻) in the electrolytic solution 6 are able to be each captured by a plurality of nitrogen atoms that are included in the heterocyclic ring of the cyclic amine compound and that form the imaginary sphere. Thus, malfunction caused due to presence of fluoride ions can be inhibited.

Furthermore, in the battery 1 in which the cyclic amine compound such as the cyclic amines 1 and 3 (see chemical formulas 1 and 3) of Examples 2 to 6 having the imaginary sphere diameter Dh of 0.11 to 0.20 nm (=1.1 to 2.0 Å, 90% to 170% of the diameter DF of a fluoride ion) is used as the capturing compound 6C, fluoride ions (F⁻) in the electrolytic solution 6 are able to be more appropriately captured. Thus, malfunction caused due to presence of fluoride ions can be further inhibited.

In addition, the relationship between the imaginary sphere diameter Dh of the capturing compound and reduction (capturing of chloride ions) of the chloride ion concentration CCL in the electrolytic solution is also examined. In the battery 1 in which the cyclic amine compound having the imaginary sphere diameter Dh of 0.18 to 0.24 nm (=1.8 to 2.4 Å, 150% to 200% of the diameter DF of a fluoride ion, and 100% to 130% of the diameter DCL of a chloride ion) is used as the capturing compound 6C, chloride ions (Cl⁻) in addition to fluoride ions (F⁻) in the electrolytic solution 6 are able to be captured. Therefore, it is assumed that malfunction caused due to presence of chloride ions as well as malfunction caused due to presence of fluoride ions can be inhibited.

Furthermore, in the battery 1 in which the cyclic amine compound having the imaginary sphere diameter Dh of 0.18 to 0.20 nm (=1.8 to 2.0 Å, 150% to 170% of the diameter DF of a fluoride ion, and 100% to 110% of the diameter DCL of a chloride ion) is used as the capturing compound 6C, fluoride ions (F⁻) in the electrolytic solution 6 are able to be captured. In addition thereto, chloride ions (Cl⁻) are able to be also suitably captured. Therefore, it is assumed that malfunction caused due to presence of fluoride ions can be inhibited, and furthermore, malfunction caused due to presence of chloride ions can also be suitably inhibited.

Furthermore, in the battery 1 in which the cyclic amine 1 (see chemical formula 1) of each of Examples 2 to 5, that is, 1,5,9-triazacyclododecane is used as the capturing compound 6C, fluoride ions (F⁻) in the electrolytic solution 6 are able to be captured, and furthermore, chloride ions (Cl⁻) therein are able to be particularly suitably captured. Therefore, it is assumed that malfunction caused due to presence of fluoride ions can be inhibited, and furthermore, malfunction caused due to presence of chloride ions can also be suitably inhibited.

In a case where the cyclic amine 1 is used as the capturing compound 6C, the compound concentration CN of the cyclic amine 1 in the electrolytic solution 6 may range from 0.8 to 2.5 mol/L as in, for example, Examples 2 and 4 as described above in consideration of both the compound concentration CN (used amount) of the cyclic amine 1 and an effect of reducing the fluoride ion concentration CF and the chloride ion concentration CCL.

Alternatively, in the battery 1 in which the cyclic amine 3 (see chemical formula 3) of Example 6, that is, 2,2',2"-(1,4,7-triazonane-1,4,7-triyl)triacetic acid is used as the capturing compound 6C, fluoride ions (F⁻) in the electrolytic solution 6 are able to be particularly suitably captured. Therefore, it is assumed that malfunction caused due to presence of fluoride ions can be suitably inhibited.

Examples in which the cyclic amine compound (the cyclic amines 1 to 3, see chemical formulas 1 to 3) can be used as the capturing compound 6C have been described above. However, another cyclic amine compound or a cyclic amide compound can also be used as the capturing compound 6C to be added to the electrolytic solution 6.

For example, as the capturing compound 6C, a cyclic amine compound (hereinafter, referred to as "cyclic amine 5") represented by the following chemical formula 6, specifically, 1,4-di-amino-cyclohexane in which the substituent R is a hydrogen atom, can be used. The imaginary sphere diameter Dh of the cyclic amine 5 is 0.12 nm. Therefore, similarly to the cyclic amine 3 (see chemical formula 3) described above, since the imaginary sphere diameter Dh (0.12 nm) is almost equal to the diameter DF (0.119 nm) of a fluoride ion (Dh=DF+0.001 nm), a fluoride ion can be particularly suitably captured by two nitrogen atoms that are included in the heterocyclic ring of the cyclic amine 5 and that form the imaginary sphere. However, since the imaginary sphere diameter Dh is excessively less than the diameter DCL (0.181 nm) of a chloride ion, chloride ions cannot be captured. That is, the cyclic amine 5 can also selectively capture only fluoride ions among fluoride ions and chloride ions in the electrolytic solution.

In the following chemical formula 6, R represents any substituent such as an alkyl group, an amino group, an amide group, and a carbonyl group as well as a hydrogen atom (the same applies to chemical formulas 7 to 10 described below).

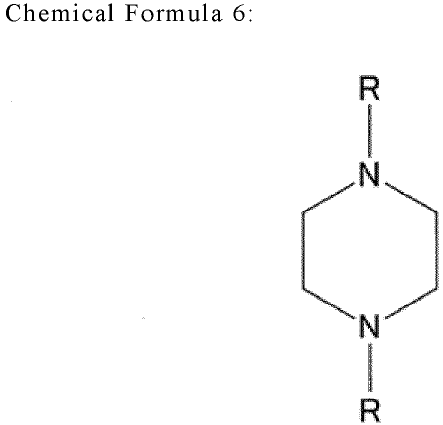

In addition, as the capturing compound 6C, a cyclic amide compound (hereinafter, referred to as "cyclic amide 1") is represented by the following chemical formula 7 and the cyclic amide compound resembles in the chemical formula, the cyclic amine 5 represented by the above-described chemical formula 6. Specifically, cyclohexane-1,4-diamide in which the substituent R is a hydrogen atom can also be used. The imaginary sphere diameter Dh of the cyclic amide 1 is 0.115 nm. The imaginary sphere diameter Dh of the cyclic amide 1 is slightly less than that of the above-described cyclic amine 5. This may be because oxo groups are added to the heterocyclic ring, and flexibility of the heterocyclic ring is thus reduced. Also in the cyclic amide 1, similarly to the cyclic amines 3 and 5, a fluoride ion can be particularly suitably captured by two nitrogen atoms that are included in the heterocyclic ring of the cyclic amide 1 and that form the imaginary sphere since the imaginary sphere diameter Dh (0.115 nm) is almost equal to the diameter DF of a fluoride ion. However, since the imaginary sphere diameter Dh is excessively less than the diameter DCL of a chloride ion, chloride ions cannot be captured. That is, the cyclic amide 1 can also selectively capture only fluoride ions among fluoride ions and chloride ions in the electrolytic solution.

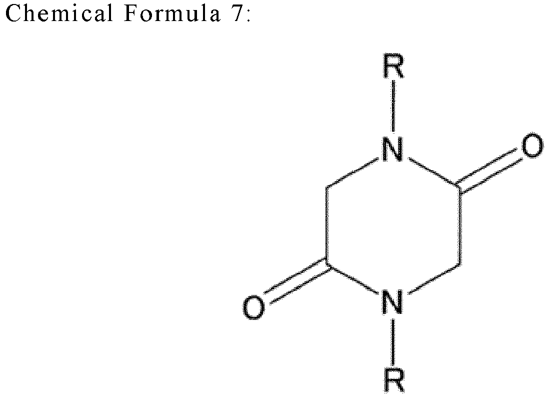

Furthermore, as the capturing compound 6C, a cyclic amine compound (hereinafter, referred to as "cyclic amine 6") represented by the following chemical formula 8, specifically, 1,3,6-tri-amino-cycloheptane in which the substituent R is a hydrogen atom can also be used. The imaginary sphere diameter Dh of the cyclic amine 6 is 0.15 nm. Therefore, similarly to the cyclic amines 3 and 5 (see chemical formulas 3, 6) described above, the imaginary sphere diameter Dh (0.15 nm) is slightly larger than the diameter DF (0.119 nm) of a fluoride ion (Dh=DF+0.031 nm), and thus a fluoride ion can be particularly suitably captured by three nitrogen atoms that are included in the heterocyclic ring of the cyclic amine 6 and that form the imaginary sphere. However, since the imaginary sphere diameter Dh is excessively less than the diameter DCL of a chloride ion, chloride ions cannot be captured. That is, the cyclic amine 6 can also selectively capture only fluoride ions among fluoride ions and chloride ions in the electrolytic solution.

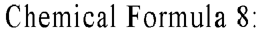

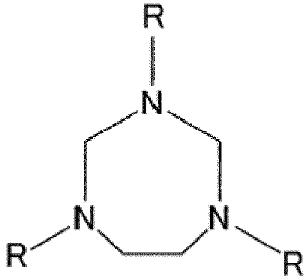

In addition, as the capturing compound 6C, a cyclic amide compound (hereinafter, referred to as "cyclic amide 2") that is represented by the following chemical formula 9 and that resembles, in the chemical formula, the cyclic amine 6 represented by the above-described chemical formula 8 can also be used. Specifically, cycloheptane-1,3,6-tri-amide in which the substituent R is a hydrogen atom can be used. The imaginary sphere diameter Dh of the cyclic amide 2 is 0.145 nm. The imaginary sphere diameter Dh of the cyclic amide 2 is slightly less than that of the above-described cyclic amine 6. This may also be because oxo groups are added to the heterocyclic ring, and flexibility of the heterocyclic ring is thus reduced. Also in the cyclic amide 2, similarly to the cyclic amines 3 and 5, the imaginary sphere diameter Dh (0.145 nm) is slightly larger than the diameter DF of a fluoride ion, and thus a fluoride ion can be particularly suitably captured by three nitrogen atoms that are included in the heterocyclic ring of the cyclic amide 2 and that form the imaginary sphere. However, since the imaginary sphere diameter Dh is excessively less than the diameter DCL of a chloride ion, chloride ions cannot be captured. That is, the cyclic amide 2 can also selectively capture only fluoride ions among fluoride ions and chloride ions in the electrolytic solution.

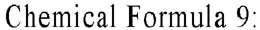

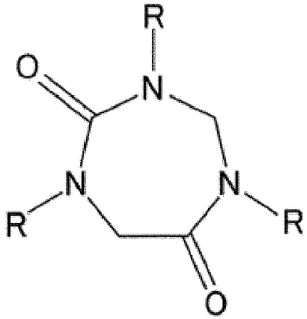

Furthermore, as the capturing compound 6C, a cyclic amine compound (hereinafter, referred to as "cyclic amine 7") represented by the following chemical formula 10, specifically, 1,3,5,7-tetra-amino-cyclooctane in which the substituent R is a hydrogen atom can also be used. The imaginary sphere diameter Dh of the cyclic amine 7 is 0.19 nm. Therefore, similarly to the cyclic amine 1 (see chemical formula 1) described above, since the imaginary sphere diameter Dh (0.19 nm) is slightly larger than the diameter DF (0.119 nm) of a fluoride ion (Dh=DF+0.071 nm), a fluoride ion can be captured by four nitrogen atoms that are included in the heterocyclic ring of the cyclic amine 7 and that form the imaginary sphere. Furthermore, a chloride ion can also be particularly suitably captured by the four nitrogen atoms.

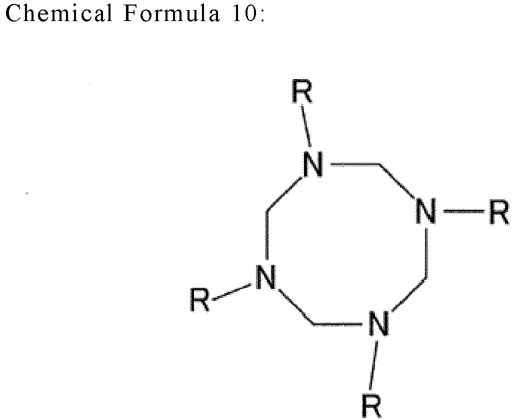

The present disclosure has been described above according to the embodiment, Examples 1 to 6, and the like. However, the present disclosure is not limited to the embodiment and the like, and it is needless to say that modifications can be made as appropriate without departing from the gist of the present disclosure.

For example, in the embodiment and Examples 1 to 6, one kind of the capturing compound 6C is added to the electrolytic solution 6. Alternatively, a plurality of kinds of capturing compounds may be added. Specifically, for example, the cyclic amine 3 (see chemical formula 3) having suitable fluoride ion capturing ability and the cyclic amine 1 (see chemical formula 1) having suitable chloride ion capturing ability can also be added in combination to the electrolytic solution. In this case, both fluoride ion capturing ability and chloride ion capturing ability are good, and this is particularly preferable.

### Reference Signs List

- 1: Battery (Power storage device)
- 5: Electrode body
- 5P: Positive electrode plate
- 5N: Negative electrode plate
- 5S: Separator
- 6: Electrolytic solution
- 6A: Organic solvent
- 6S: Lithium salt (Salt)
- 6C: Capturing compound

## Claims

1. A power storage device (1) comprising an electrolytic solution (6) including an electrolyte of a fluorine-containing salt (6S), wherein
the electrolytic solution (6) includes at least one kind of a capturing compound (6C), and
the capturing compound (6C)
includes a heterocyclic ring formed of a plurality of carbon atoms and a plurality of nitrogen atoms,
is formed of any one of a cyclic amine compound and a cyclic amide compound in which an imaginary sphere formed by the plurality of nitrogen atoms included in the heterocyclic ring has an imaginary sphere diameter (Dh) of 0.11 to 0.24 nm, and
is capable of capturing fluoride ions (F⁻).

2. The power storage device (1) according to claim 1, wherein
in at least one kind of the capturing compound (6C),
the imaginary sphere diameter (Dh) is 0.11 to 0.20 nm.

3. The power storage device (1) according to claim 1, wherein
in at least one kind of the capturing compound (6C),
the imaginary sphere diameter (Dh) is 0.18 to 0.24 nm, and
chloride ions (Cl⁻) can also be captured.

4. The power storage device (1) according to claim 3, wherein
in at least one kind of the capturing compound (6C),
the imaginary sphere diameter (Dh) is 0.18 to 0.20 nm.

5. The power storage device (1) according to any one of claim 1 to claim 4, wherein
one kind of the capturing compound (6C) is 1,5,9-triazacyclododecane.

6. The power storage device (1) according to claim 5, wherein
the electrolytic solution (6) contains 1,5,9-triazacyclododecane at a compound concentration (CN) ranging from 0.8 to 2.5 mol/L.

7. The power storage device (1) according to claim 2, wherein
one kind of the capturing compound (6C) is 2,2',2"-(1,4,7-triazonane-1,4,7-triyl)triacetic acid.
